# EUROPEAN PATENT APPLICATION

(11) **EP 3 333 061 A1**
(43) Date of publication of application: **13.06.2018**
(21) Application number: 16832374.9
(22) Date of filing: 05.08.2016
(51) Int. Cl.: B62M 6/90, B62H 5/00, H01M 2/10, H01M 2/02

(54) **DEVICE FOR PREVENTING THE THEFT OF BATTERIES OF ELECTRIC BICYCLES**

(30) Priority: 06.08.2015 ES 201530925 U
(71) Applicant: Ride on Consulting, S.L., 31011 Pamplona (Navarra) (ES)
(72) Inventor: VITAL HUICI, Miguel, 31011 Pamplona (Navarra) (ES)
(74) Representative: Pons Ariño, Angel
(86) International application number: PCT/ES2016/070593
(87) International publication number: WO 2017/021582

(57) **Abstract**

The invention relates to a device for preventing the theft of batteries of electric bicycles, of the type that comprise a frame (1) of the bicycle with a hollow profile (2). Said hollow profile (2) has an opening, houses a casing (3) containing the battery (4), and comprises a first drill hole (8) and a second drill hole (5) facing each other. It has a bolt with a pin (6) that can be moved between two positions, passing through the first drill hole (8) or both drill holes. It comprises a cover (7) that covers the opening of the hollow profile (2) and is detachably connected to the casing (3) with connection elements (12) such that, when the casing (3) is inside the hollow profile (2), said connection elements are also inside the hollow profile (2).

## Description

### OBJECT OF THE INVENTION

The present invention falls within the technical field of electric bicycles. More specifically, an electric bicycle batteries anti-theft device is described.

### BACKGROUND OF THE INVENTION

In the state of the art, electric bicycles are known in which the battery is provided with its own casing, which is housed in the bicycle frame in a receptacle designed for this function. In known solutions, the system comprises a lock housed inside the casing of the battery. Said lock activates a latch that hooks a part welded to the bicycle frame.

The technical problem of this solution is that the lock is linked to elements made of plastic materials, such as, for example, the casing of the battery. In most cases, electric bicycles for rental are anchored in charging stations that are arranged in the street and can therefore be subject to vandalism. Therefore, the fact that the lock is linked to elements made of plastic material makes it easy for a thief to break the lock and steal the bicycle battery.

### DESCRIPTION OF THE INVENTION

The present invention is especially intended for application to electric bicycles for rental since enabling the battery to be integrated in the bicycle itself prevents actions of vandalism.

The key of the anti-theft device of the present invention is that it comprises a portion of the bicycle frame and the lock is arranged in said frame. Since the bicycle frame is metallic, generally made of aluminum, the lock performs a more effective closing than in the known solutions of the state of the art in which the fastening of the battery on the bicycle is carried out by means of plastic elements.

The anti-theft device is arranged in the frame of an electric bicycle and comprises a hollow profile of said frame, made of metallic material, intended to receive a casing on the inside of which the battery is housed. The device comprises at least one lock with a bolt that goes through the hollow profile of the bicycle frame and that is introduced in a borehole of the casing of the battery of the bicycle.

The lock has a push button. Once the casing has been introduced inside the hollow profile (aligning the borehole of the hollow profile of the frame and the borehole of the casing) a cylinder of the lock is pressed that moves the bolt into the hollow profile in order to introduce it through the corresponding boreholes of the casing. When the user wants to remove the battery they must introduce a key in order to release the bolt. When the bolt is released, it comes out of the borehole of the casing of the battery and the battery can be removed from the hollow profile for replacement thereof or for any maintenance operation.

The cover of the casing is joined to the casing preferably by means of screws. Thus, the result is a casing and cover assembly, with the casing and the covert joined to each other. When the casing is introduced into the hollow profile the cover remains on the outside, covering the opening of the hollow profile through which the casing is introduced. The joining elements of the cover and the casing are arranged such that, in the mounted position of the battery, they remain inside the hollow profile. Therefore, a user who wants to try to manipulate the cover in order to remove the battery will not be able to do so because they do not have access to said joining elements. In other words, the cover and the housing can only be separated or joined when they are outside the hollow profile.

### DESCRIPTION OF THE DRAWINGS

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:
Figure 1a. - Shows a cross-sectional view of the anti-theft device in which the bolt of the lock is fastening the position of the casing inside the hollow profile.
Figure 1b. - Shows a zoom view of the bolt of the lock in a position in which it has released the casing.
Figure 2. - Shows a view of the assembly made up of the casing and the cover.
Figure 3a. - Shows a perspective view of a part of the casing with the battery.
Figure 3b. - Shows a perspective view of the casing of the battery with the cover.
Figure 3c. - Shows a view of the bicycle frame, with the assembly of casing and cover already arranged inside the hollow profile.

### PREFERRED EMBODIMENT OF THE INVENTION

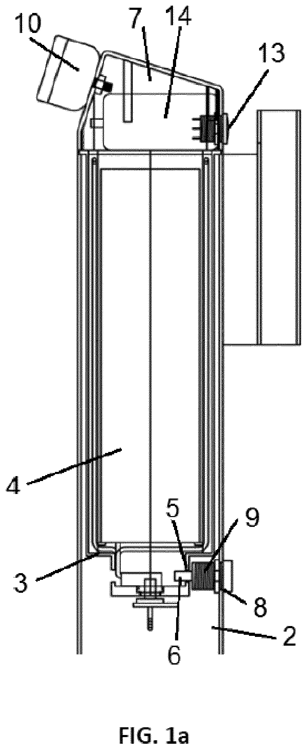

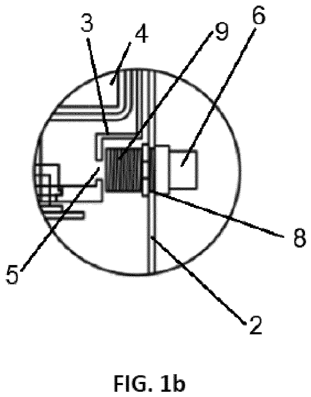

What follows is a description of an exemplary embodiment of the present invention with the help of Figures 1 to 3.

The anti-theft device for batteries of electric bicycles can be seen for example in Figure 1a. It represents a cross-sectional view of the elements that make up the device in order to show the relationship between them in the mounting position in the bicycle.

The device is designed to be installed on electric bicycles comprising a frame (1) that is preferably metallic, and more preferably made of aluminum.

Among the elements that make up the batteries anti-theft device are a hollow profile (2) of the bicycle frame (1) comprising a first borehole (8) and an opening. Likewise, as seen in Figure 1a, part of the device is a casing (3) that is intended to house the battery (4) and intended to be introduced inside the hollow profile (2) and that comprises at least a second borehole (5) facing the first borehole (8). The closing is carried out by means of a lock comprising a bolt (6) configured to move between a first position in which it only crosses the first borehole (8) and a second position in which it crosses the first borehole (8) and the second borehole (5). In Figure 1, a bolt is shown in the position in which it is crossing both boreholes (5, 8) in order to fasten the position of the casing (3) inside the hollow profile (2). In Figure 1b, a bolt is seen in the position in which it only crosses the first borehole (8) of the hollow profile (2) and therefore the casing (3) has been released and a user can remove it from the hollow profile (2), if desired.

The anti-theft device also comprises a cover (7) that is joined to the casing (3) in a removable manner and that covers the opening of the hollow profile (2). The joining between the cover (7) and the casing (3) is carried out by means of joining elements that are arranged in the casing (3) in a position such that when the casing (3) is inside the hollow profile (2), said joining elements are also inside the hollow profile (2).

In an exemplary embodiment, such as the one seen in Figure 1a, the lock further comprises a thread (9) that enables said lock to be fastened to the hollow profile (2) by means of a nut that is screwed into the thread (9) from inside the hollow profile (2).

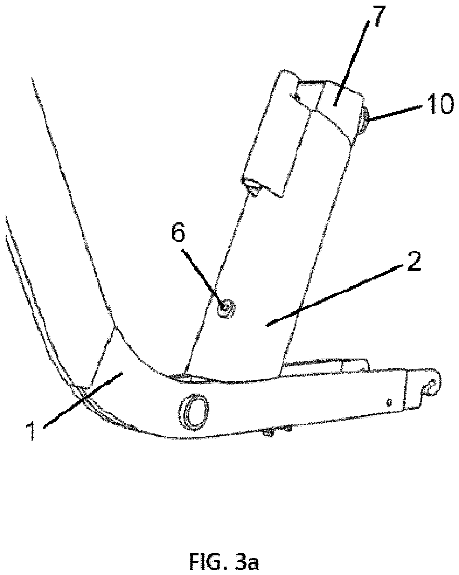

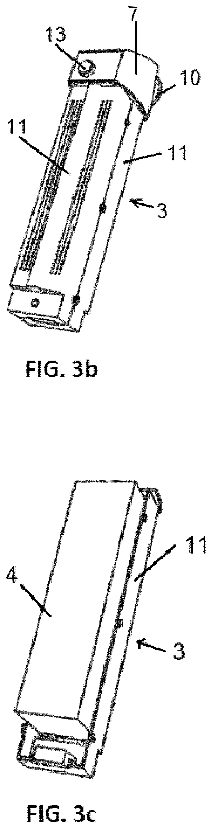

In Figures 3a, 3b, and 3c, some perspectives of the elements of the device have been represented. In Figure 3a, the battery (4) and a portion of the casing (3) can be seen. In Figure 3b, the part (11) that was missing in the casing (3) in order to completely cover the battery (4) and the cover (7) has been added to the elements of the mentioned figure. Afterwards, in Figure 3c, a portion of the bicycle frame (1) has been represented with the hollow profile (2), and the cover (7) is seen in the final position thereof. The casing (3) is no longer seen in Figure 3c because it is installed inside the hollow profile (2).

In a preferred exemplary embodiment, the cover (7) comprises a light (10). Said light (10) has a power cable and is activated by means of a push button located on the handlebar of the bicycle. Likewise, the cover (7) can comprise a GPS tracker (14) that can be very useful, especially in cases in which the anti-theft device is installed in electric bicycles for rental. The GPS tracker (14) can be used to find out where the bicycle is at all times and prevent the users from leaving areas of limited use or to locate the bicycle in the case of attempted theft.

In another exemplary embodiment, the cover (7) can further comprise an emergency cutoff switch (13). Said emergency cutoff switch (13) is pressed in order to disconnect the power. It relates to a switch that must be included in electric bicycles according to regulations. In the present invention, the cover (7) of the anti-theft device has been used for the positioning thereof.

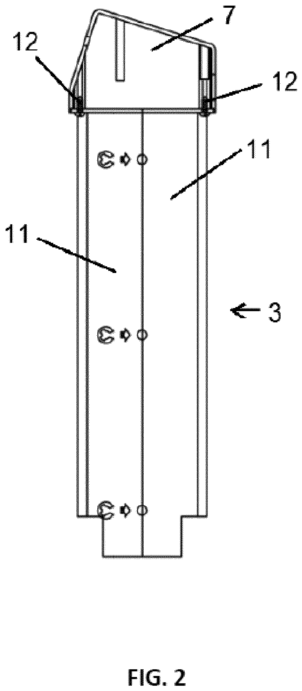

Preferably, as seen for example in Figures 1a and 3a, the casing (3) is made up of two symmetrical parts (11) that are joined to each other. Also in an exemplary embodiment, the casing (3) can comprise at least one compartment intended to receive the battery (4) and a compartment intended to receive cables for joining the battery (4) to a charging system of the bicycle. The joining of the parts (11) can be carried out by means of security rings that are inserted into circular projections available in the two parts (11) of the casing (3), as seen in Figure 2.

The preferred materials are plastic for the casing (3) and aluminum for the hollow profile (2).

## Claims

1. An electric bicycle batteries anti-theft device for electric bicycles of the type comprising a bicycle frame (1) and **characterized in that** it comprises:
- a hollow profile (2) of the bicycle frame (1) with a first borehole (8) and an opening,
- a casing (3) intended to house the battery (4) and intended to be introduced inside the hollow profile (2) and comprising at least a second borehole (5) facing the first borehole (8),
- a lock comprising a bolt (6) configured to move between a first position in which it only crosses the first borehole (8) and a second position in which it crosses the first borehole (8) and the second borehole (5),
- a cover (7) joined to the casing (3) in a removable manner and that covers the opening of the hollow profile (2);
- joining elements (12) of the cover (7) to the casing (3) arranged in the casing (3) in a position such that when the casing (3) is inside the hollow profile (2), said joining elements are also inside the hollow profile (2).

2. The anti-theft device according to claim 1, **characterized in that** the lock further comprises a spring (9) arranged around the bolt (6), inside the hollow profile (2), in contact with the casing (3).

3. The anti-theft device according to claim 1, **characterized in that** the cover (7) further comprises a light (10).

4. The anti-theft device according to claim 1, **characterized in that** the cover (7) further comprises a GPS tracker (14).

5. The anti-theft device according to claim 1, **characterized in that** the cover (7) further comprises an emergency cutoff switch (13).

6. The anti-theft device according to claim 1, **characterized in that** the casing (3) is made of plastic.

7. The anti-theft device according to claim 1, **characterized in that** the casing (3) comprises at least one compartment intended to receive the battery (4) and a compartment intended to receive cables for joining the battery (4) to a charging system of the bicycle.

8. The anti-theft device according to claim 1, **characterized in that** the casing (3) is made up of two symmetric parts (11) joined to each other.

9. The anti-theft device according to claim 1, **characterized in that** the hollow profile (2) is made of aluminum.
